(19) Europäisches Patentamt

European Patent Office

Office européen des brevets

(11) Veröffentlichungsnummer: **0 261 479 B1**

## (12) EUROPÄISCHE PATENTSCHRIFT

(45) Veröffentlichungstag der Patentschrift: **17.08.94**

(21) Anmeldenummer: **87112944.1**

(22) Anmeldetag: **04.09.87**

(51) Int. Cl.⁵: **H04B 10/00**

(54) Optischer Überlagerungsempfänger.

(30) Priorität: **09.09.86 DE 3630619**

(43) Veröffentlichungstag der Anmeldung:
**30.03.88 Patentblatt 88/13**

(45) Bekanntmachung des Hinweises auf die
Patenterteilung:
**17.08.94 Patentblatt 94/33**

(84) Benannte Vertragsstaaten:
**CH DE ES FR GB IT LI SE**

(56) Entgegenhaltungen:
**DE-A- 3 150 697**
**FR-A- 2 496 344**

**ELECTRONICS LETTERS, Band 21, Nr. 18, 29. August 1985, Seiten 787-788, Stevenage, GB; T. OKOSHI et al.: "New polarisation-control scheme for opticalheterodyne receiver using two faraday rotators"**

**THIN SOLID FILMS, Band 126, 1985, Seiten 167-176, Elsevier Sequoia, Lausanne, CH; R.C. BOOTH: "LiNbO3 integrated optic devices for coherent optical fibre systems"**

(73) Patentinhaber: **Alcatel SEL Aktiengesellschaft**
**Lorenzstrasse 10**
**D-70435 Stuttgart (DE)**

(84) Benannte Vertragsstaaten:
**DE**

(73) Patentinhaber: **ALCATEL N.V.**
**Strawinskylaan 537, (World Trade Center)**
**NL-1077 XX Amsterdam (NL)**

(84) Benannte Vertragsstaaten:
**CH ES FR GB IT LI SE**

(72) Erfinder: **Mohr, Friedemann, Dr.**
**Stauferstrasse 6**
**D-7253 Renningen (DE)**

(74) Vertreter: **Schmidt, Werner Karl, Dipl.-Phys. et al**
**Alcatel SEL AG**
**Patent- und Lizenzwesen**
**Postfach 30 09 29**
**D-70449 Stuttgart (DE)**

**IEEE TRANSACTIONS ON ELECTRON DEVI-CES, Band ED-32, Nr. 12, Dezember 1985, Seiten 2624-2629, IEEE, New York, US; T. OKOSHI: "Polarization-state control schemes for heterodyne or homodyne optical fiber communications"**

**Beschreibung**

Die Erfindung geht aus von einem optischen überlagerungsempfänger wie im Oberbegriff dem Anspruchs 1 angegeben.

Ein überlagerungsempfänger ist beispielsweise bekannt aus "Coherent Fiberoptic Communications" von D.W.Smith, FOCUS/Electro-Optics, Nov. 85, Seiten 92ff.

Bei einem Überlagerungsempfänger ist es wünschenswert, daß die Polarisationsrichtung des empfangenen Lichtstrahls und die des im Lokaloszillator erzeugten Lichtstrahls möglichst gut übereinstimmen. Dies kann man beispielsweise dadurch erreichen, daß zur Übertragung des dem Empfänger zugeführten Lichtstrahls eine polarisationserhaltende Faser verwendet wird und man diese mit dem überlagerungsempfänger so verbindet, daß die Polarisationrichtungen des vom Überlagerungsempfänger empfangenen Lichtstrahls und des vom Lokaloszillator abgegebenen Lichtstrahls in gewünschter Relation zueinander stehen.

Polarisationserhaltende Lichtleitfasern haben jedoch bestimmte Nachteile, z. B. ist ihre Dämpfung relativ groß.

Ein optischer Überlagerungsempfänger wie im Oberbegriff des Anspruchs 1 angegeben, wurde beispielsweise beschrieben von T. Okoshi et al., "New Polarization-Control Scheme for Optical Heterodyne Receiver Using Two Faraday Rotators", Electronics Letters, Vol. 21, No. 18, pp. 787 and 788.

In einem solchen Empfänger wird das automatische Regelsystem, das den Polarisationszustand des empfangenen Lichtstrahls oder das vom Lokaloszillator erzeugten Lichtstrahls beeinflußt, durch einen Mikroprozessor realisiert, der ein Verfahren zum Aufsuchen eines Spitzenwerts implementiert, um den Polarisationszustand zu optimieren. Die Polarisation wird dabei von zwei Polarisationsdrehern unter Ausnützung des Faraday-Effekts beeinflußt.

Bekannte Polarisationsdreher, die den Faraday-Effekt ausnutzen, sind teuer und voluminös und benötigen hohe Ströme.

Aufgabe der Erfindung ist es, einen Überlagerungsempfänger anzugeben, bei dem die Beeinflussung des Polarisationszustandes durch eine einfache und schnell arbeitende Anordnung erfolgt, ohne hohe Ströme zu benötigen.

Diese Aufgabe wird mit den in Anspruch 1 oder Anspruch 4 angegebenen Mitteln gelöst. Vorteilhafte Weiterbildungen sind den jeweils nachgeordneten Ansprüchen zu entnehmen.

In dem neuen optischen Überlagerungsempfänger erfolgt eine Polarisationsregelung und zwar so, daß die Polarisation des empfangenen Lichtstrahls stets optimal in bezug auf die Polarisation des in dem Lokaloszillator erzeugten Lichtstrahls abgestimmt ist. Dadurch erreicht man, daß das elektrische Ausgangssignal des optischen Überlagerungsempfängers stets seinen maximalen Wert hat. Die Beeinflussung der Polarisation erfolgt hierbei dadurch, daß Stokessche Parameter aus einem elektrischen Signal abgeleitet werden. Dieses elektrische Signal wird von einem optoelektrischen Wandler erzeugt, der mit dem in Zwischenfrequenzlage liegenden Lichtstrahl des Überlagerungsempfängers gespeist wird.

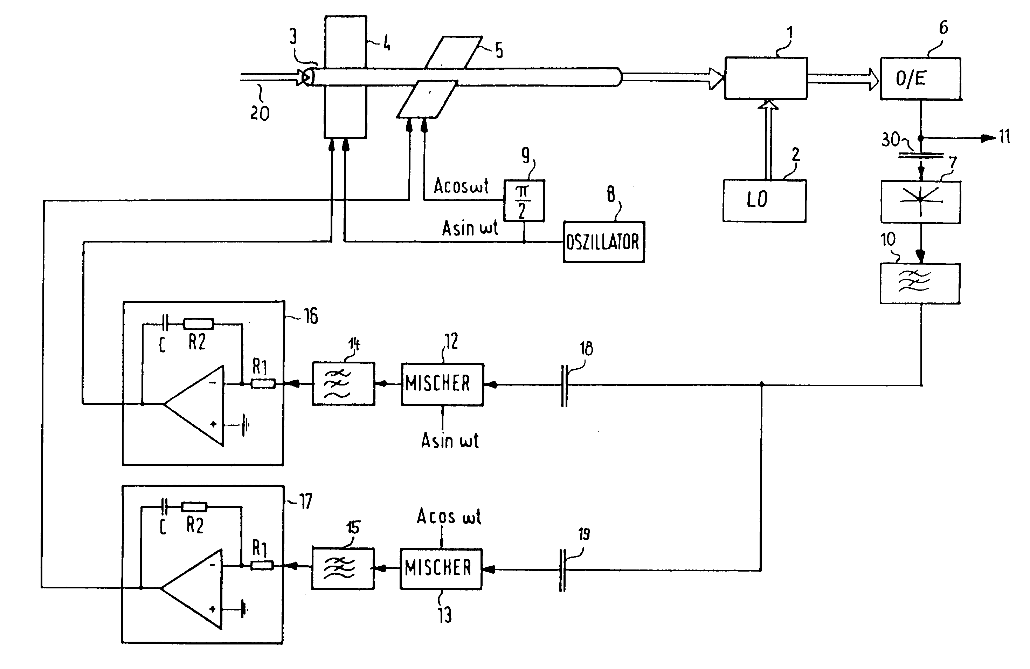

Die Erfindung wird anhand der Zeichnung, die ein Blockschaltbild des neuen optischen Überlagerungsempfängers ist, beispielsweise näher erläutert.

Ein Lichtstrahl 20, der dem optischen Überlagerungsempfänger zugeführt wird, breitet sich in dem optischen Überlagerungsempfänger in einer Lichtleitfaser 3 aus. In einem Lokaloszillator 2 wird ein weiterer Lichtstrahl erzeugt, der ebenfalls polarisiert ist. Der in dem Lokaloszillator erzeugte Lichtstrahl und der dem Überlagerungsempfänger zugeführte Lichtstrahl 20 werden in einem Bauelement 1 einander überlagert. Das Bauelement 1 ist so ausgestaltet, daß sich in ihm die Polarisationsrichtung der Lichtstrahlen nicht verändert. Der durch die Überlagerung erzeugte Lichtstrahl wird einem optisch/elektrischen Wandler 6 zugeführt. Das von diesem Bauelement abgegebene elektrische Signal wird zur weiteren Verarbeitung weitergeleitet 11. Das elektrische Signal ist zur Nachrichtenübertragung amplituden-, phasen-, oder frequenzmoduliert. Ein Teil dieses elektrischen Signals wird ausgekoppelt und einem Vollwellengleichrichter 7 zugeführt. Zwischen den optisch/elektrischen Wandler 6 und den Vollwellengleichrichter 7 ist ein Kondensator 30 eingefügt. Er sperrt den Gleichstromanteil des vom optisch/elektrischen Wandler abgegebenen Signals und läßt nur die Wechselspannungsanteile mit den Frequenzen, mit denen das elektrische Signal zur Nachrichtenübertragung moduliert ist, passieren. Dem Vollwellengleichrichter 7 ist ein Tiefpaß 10 nachgeschaltet. Der Tiefpaß 10 ist so bemessen, daß ihn nur (später noch näher zu erläuternde) Wechselspannungssignale passieren können. Das Ausgangssignal des Tiefpasses 10 wird in zwei gleiche Anteile aufgeteilt und diese werden jeweils über einen Kondensator 18, 19, einen Mischer 12, 13, und einen weiteren Tiefpaß 14, 15 jeweils einem Regelverstärker 16, 17 zugeführt. Die Ausgangssignale der beiden Regelverstärker 16 und 17 regeln jeweils eines der Polarisationsstellglieder 4 und 5. Diese beiden Polarisationsstellglieder 4 und 5 wirken in Richtungen, die senkrecht zur Lichtleitfaser 3 sind, auf den Polarisationszustand des Lichtstrahls 20, der sich in dieser Lichtleitfaser 3 ausbreitet, ein. Die Richtungen, in denen die beiden Polarisationsstellglieder wirken, sind außerdem um 45° gegeneinander geneigt. Die Richtung, unter der das dem Bauelement 1 benachbarte Polarisationsstellglied 5 auf den Lichtstrahl 20 einwirkt, ist um 45° gegen die Polarisationsrichtung des Lichtstrahls, der in dem Lokaloszillator 2 erzeugt wird, geneigt. Die Polarisationsstellglieder bewirken unterschiedliche Phasenverzögerungen für die Anteile des Lichtstrahls, deren Polarisationsrichtungen aufeinander senkrecht stehen. Das erste Polarisationsstellglied bewirkt eine Phasenverschiebung um $\delta$ ; das zweite um $\epsilon$. Die Phasenverschiebungen hängen jeweils vom Druck des Polarisationsstellgliedes auf die Lichtleitfaser ab. Mit dem ersten Polarisationsstellglied 4 wird der Stokes-Parameter $\overline{S}_2$ und mit dem zweiten 5 der Stokes-Parameter $\overline{S}_3$ geregelt. Durch Regelung dieser Parameter kann, wie an sich bekannt, der Polarisationszustand in den gewünschten Zustand gebracht werden. Dies läßt sich anhand der Poincaré-Darstellung zeigen.

Eine Polarisationsregelung, wie sie hier angewandt wird, ist in ähnlicher Form aus der DE-OS 31 50 697 bekannt. Bei der dort beschriebenen Polarisationsregelung wird der Teil eines Lichtstrahls, der nicht die gewünschte Polarisationsrichtung aufweist, ausgekoppelt und dieser Anteil wird danach zu Null geregelt. Eine solche Polarisationsregeleinrichtung kann einem optischen Überlagerungsempfänger vorgeschaltet werden. Dann ist es möglich, dem optischen Überlagerungsempfänger den empfangenen Lichtstrahl mit einer definierten Polarisationsrichtung zuzuführen, wodurch polarisationerhaltende Lichtleitfasern entbehrlich werden. Aber auch in diesem Fall ist es, wie bei der Verwendung von polarisationserhaltenden Lichtleitfasern, notwendig, daß der empfangene Lichtstrahl dem optischen Überlagerungsempfänger mit einer definierten Polarisationsrichtung zugeführt wird. Dieses Erfordernis ist bei dem neuen Überlagerungsempfänger nicht mehr gegeben.

Als Polarisationsstellglieder können die aus der DE-OS 31 50 697 bekannten verwendet werden.

An die Elektroden solcher Polarisationsstellglieder werden Spannungen Asinωt und Acosωt angelegt. Die beiden Spannungen der Signale, die dem einen oder dem anderen Polarisationsstellglied zugeführt werden, müssen unterschiedlich sein. Sie können sich in ihrer Frequenz oder in ihrer gegenseitigen Phasenlage unterscheiden. Unterscheiden sie sich durch unterschiedliche Phasen, dann muß die Phasendifferenz $(2n+1)\frac{\pi}{2}$ sein. Dies ist im vorliegenden Fall, bei dem Signale Asinωt und Acosωt verwendet werden, erfüllt.

In einem Oszillator 8 wird ein sinusförmiges Signal mit der Frequenz ω und der Amplitude A erzeugt. Dieses Signal wird dem ersten Stellglied 4 zugeführt. Ein Teil des in dem Oszillator 8 erzeugten Signals wird einem Phasenschieber 9, der eine

Phasenverschiebung um $\frac{\pi}{2}$ erzeugt, zugeführt und das so phasenverschobene Signal Acosωt wird dem zweiten Stellglied zugeführt.

A hat einen Wert von 5V und ω ist 180 kHz.Der Wert für ω wird so gewählt, daß er außerhalb des Frequenzspektrums der Modulationsfrequenzen, mit denen das Trägersignal zur Nachrichtenübertragung moduliert wird, liegt. Dadurch wird ein unerwünschtes Nebensprechen vermieden. Die beiden Signale Asinωt und Acosωt sind die bereits oben erwähnte Wechselspannungssignale, auf die der Durchlaßbereich des Tiefpaßfilters 10 abgestimmt ist.

Durch Anlegen dieser Signale an die Polarisationsstellglieder üben sie sich mit der Signalfrequenz ω ändernde Drucke auf die Lichtleitfaser 3 aus. Dadurch oszilliert auch der Polarisationszustand mit der Frequenz ω um einen Mittelwert. Bei einer geeigneten Wahl der Frequenz ω macht sich dieses Oszillieren bei der Nutzung des Lichtstrahls nicht störend bemerkbar. Das Oszillieren des Polarisationszustandes ist notwendig, um auf die nachfolgend beschriebene Weise die Regelsignale erzeugen zu können.

Die Kondensatoren 18 und 19, die zwischen das Tiefpaßfilter 10 und die Mischer 12 und 13 geschaltet sind, dienen dazu, daß zu den Mischern keine Gleichspannungskomponenten gelangen.

Dem ersten Polarisationsstellglied 4 wird das Signal sinωt zugeführt. Dementsprechend wird dem Mischer 12, dessen Ausgangssignal dem Regelverstärker 16, der das Regelsignal für das erste Polarisationsstellglied 4 erzeugt, als Mischsignal das Signal Asinωt zugeführt. Dem anderen Mischer 13 wird das Signal Acosωt zugeführt.

Zur Erzeugung der Regelsignale in den beiden Regelverstärkern 16 und 17, die als PI-Regelverstärker realisiert sind, werden diesen nur die Gleichspannungsanteile der Ausgangssignale der Mischer 12 und 13 zugeführt. Diese sind zu den Stokes-Parametern $\overline{S}_2$ und $\overline{S}_3$ proportional. Diese unterschiedlichen Signale, die notwendig sind, um für die beiden Polarisationsstellgliedern eindeutig zuzuordnende Regelsignale erzeugen zu können, erhält man nur dann, wenn man den Elektroden der Polarisationsstellglieder voneinander unterscheidbare Signale zuführt. Um zu erreichen, daß die beiden PI-Regelverstärker nur die Gleichspannungsanteile der Mischerausgangssignale erhalten, sind den Mischern 12 und 13 die bereits erwähnten Tiefpässe 14 und 15 nachgeschaltet. In dem PI-Regelverstärker 16 wird das Regelsignal für das erste Polarisationsstellglied 4 und im zweiten PI-Regelverstärker 17 wird das Regelsignal für das zweite Polarisationsstellglied erzeugt. PI-Regelverstärker sind an sich bekannt. Sie enthalten jeweils einen Differenzverstärker, dessen " + Eingang" auf Masse liegt und dessen "- Eingang" über einen Widerstand R1 mit dem Tiefpaß verbunden ist. Parallel zum "- Eingang" und Ausgang des Differenzverstärkers sind ein Kondensator C und ein Widerstand R2 geschaltet.

Die Dimensionierung eines PI-Regelverstärkers abhängig von den Regelgrößen ist dem Fachmann bekannt (z. B. Fröhr/Orttenburger, Einführung in die elektronische Regelungstechnik, Siemens AG, Berlin, 1970, Kapitel 4). Bei der vorliegenden Regeleinrichtung erzeugen die Regelverstärker Spannungen, die groß genug sind, um die Polarisationsstellglieder direkt ansteuern zu können.

Falls sich der Lichtstrahl, dessen Polarisationszustand geregelt werden soll, nicht in einer Lichtleitfaser ausbreitet, müssen andere Polarisationsstellglieder verwendet werden. Geeignet als Polarisationsstellglied ist beispielsweise ein Lithiumniobat-Kristall, durch den der Lichtstrahl hindurchgeleitet wird. Durch Ausnützen des anisotropen elektro/optischen Effekts, dessen Größe von der angelegten elektrischen Spannung abhängt, werden die Anteile des Lichtstrahls, deren Polarisationsrichtungen aufeinander senkrecht stehen und die den Kristall durchlaufen, unterschiedlich verzögert. Das erste Stellglied wirkt somit für die beiden unterschiedlich polarisierten Anteile des Lichtstrahls als optischer Phasenschieber. Das zweite Stellglied wirkt in diesem Fall als TE/TM-Modenwandler. Auch in diesem Fall werden Zustände geschaffen, die den oben beschriebenen entsprechen. Wie bei den Polarisationsstellgliedern, die auf die Lichtleitfaser wirken, werden an den Kristall eine Spannung, die ein hochfrequentes Oszillieren um einen mittleren Zustand hervorruft, und eine Spannung, die das Regelsignal ist, angelegt.

Breitet sich der Lichtstrahl 20 in einem planaren Wellenleiter aus, dann ist es erforderlich (um ein maximales elektrisches Ausgangssignal zu erhalten), daß die Polarisationsrichtung des Lichts, das von dem Lokaloszillator 2 abgegeben wird, entweder in der Ebene des planaren Wellenleiters oder senkrecht hierzu liegt.

Durch die beschriebene Regelung der Polarisationsrichtung des empfangenen Lichtstrahls wird erreicht, daß die Polarisationsrichtung des empfangenen Lichtstrahls und die Polarisationsrichtung des in dem Lokaloszillator erzeugten Lichtstrahls übereinstimmen. Dadurch erreicht man, daß man unabhängig von der Polarisationsrichtung des dem optischen Überlagerungsempfänger zugeführten Lichtstrahls 20 stets ein maximales Ausgangssignal erhält.

Bei der obigen Beschreibung wurde davon ausgegangen, daß der Polarisationszustand des empfangenen Lichtstrahls geregelt wird. Stattdessen ist es auch möglich, den Polarisationszustand des von dem Lokaloszillator abgegebenen Lichtstrahls so zu regeln, daß bei der Überlagerung des empfangenen Lichtstrahls und des vom Lokaloszillator abgegebenen Lichtstrahls deren Polarisationsrichtungen gleich sind. Dies erreicht man dadurch, daß man - ausgehend vom Ausführungsbeispiel gemäß der Zeichnung - die Polarisationsstellglieder 4 und 5 nicht zwischen Empfängereingang und Bauelement 1 sondern zwischen Lokaloszillator 2 und Bauelement 1 angeordnet. Der Regelvorgang an sich bleibt unverändert.

Zu den Polarisationsrichtungen der Lichtstrahlen und den Richtungen, in denen zur Polarisationsregelung auf die Lichtstrahlen eingewirkt wird, ist zu bemerken, daß man optimale Ergebnisse dann erhält, wenn man die Richtungen wie folgt wählt:

Ausführungsbeispiel, bei dem die Regelung für den empfangenen Lichtstrahl erfolgt:

Erstes Polarisationsstellglied wirkt in Richtungen von

 0° oder 90° auf den empfangenen Lichtstrahl ein;

Zweites Polarisationsstellglied wirkt in Richtungen von

 45° oder 135° auf den empfangenen Lichtstrahl ein;

Die Richtung der linearen Polarisation des vom

 Lokaloszillator abgegebenen Lichtstrahls zeigt in die Richtung 0° oder 90°.

 Ausführungsbeispiel, bei dem die Regelung für den vom Lokaloszillator abgegebenen Lichtstrahls erfolgt:

Die Richtung der linearen Polarisation des vom

 Lokaloszillator abgegebenen Lichtstrahls zeigt in die Richtung 0° oder 90°;

Das dem Lokaloszillator benachbarte Polarisationsstellglied

 wirkt in Richtungen 45° oder 135° auf den vom Lokaloszillator abgegebenen Lichtstrahl ein;

Das andere Polarisationsstellglied wird in Richtungen 0°

 oder 90° auf den vom Lokaloszillator abgegebenen Lichtstrahl ein.

Breitet sich der Lichtstrahl anstatt in einer Lichtleitfaser in einem integriert/optischen Bauelement aus, dann wird auch eine integriert/optische Lösung zur Polarisationsregelung gewählt. Es sind zu ersetzen:

Das Stellglied mit 0° oder 90° relativer Orientierung bezüglich der Polarisationsrichtung des vom Lokaloszillator abgegebenen Lichtstrahls durch einen integriert/optischen Phasenmodulator;

Das Stellglied mit 45° oder 135° relativer Orientierung durch einen TE/TM-Modenwandler.

**Patentansprüche**

1. Optischer Überlagerungsempfänger, bei dem der empfangene Lichtstrahl (20), welcher polarisiert ist, einem in einem Lokaloszillator (2) erzeugten Lichtstrahl, welcher ebenfalls polarisiert ist, überlagert wird, bei dem der durch die Überlagerung erzeugte Lichtstrahl einem optisch/elektrischen Wandler (6) zugeführt wird, bei dem das durch diesen erzeugte elektrische Signal zur weiteren Verarbeitung weitergeleitet wird (11), von dem ein Teil ausgekoppelt und einer Regeleinrichtung (4, 5, 8, 9, 12, 13, 14, 15, 16, 17) zugeführt wird, die die Polarisation des empfangenen Lichtstrahls so regelt, daß die Amplitude des elektrischen Ausgangssignals (11) des optischen Überlagerungsempfängers maximal ist, **dadurch gekennzeichnet,** daß das Ausgangssignal des optisch/elektrischen Wandlers (6) einem Gleichrichter (7) zugeführt wird, daß zur Regelung des Polarisationszustandes des empfangenen Lichtstrahls, der sich in einer Lichtleitfaser (3) ausbreitet, zwei Polarisationsstellglieder (4, 5) vorgesehen sind, denen Regelsignale zugeführt werden, daß den Polarisationsstellgliedern (4, 5) zusätzlich zu den Regelsignalen jeweils ein Wechselspannungssignal zugeführt wird, wodurch der Polarisationszustand des empfangenen Lichtstrahls so beeinflußt wird, daß er geringfügig um einen Mittelwert oszilliert, daß sich diese Wechselspannungssignale in ihrer relativen Phasenlage zueinander um $(2n+1)\pi/2$ oder in ihrer Frequenz unterscheiden, daß das Ausgangssignal des Gleichrichters (7) in Mischern (12, 13) mit jeweils einem der Wechselspannungssignale gemischt wird, und daß die Ausgangssignale der Mischer Regelverstärkern (16, 17), die die Regelsignale für die Polarisationsstellglieder erzeugen, zugeführt werden.

2. Optischer Überlagerungsempfänger nach Anspruch 1, dadurch gekennzeichnet, daß zur Regelung des Polarisationszustandes des empfangenen Lichtstrahls (20), der sich in einer Lichtleitfaser (3) ausbreitet, die Polarisationsstellglieder (4, 5) in zwei um 45° gegeneinander geneigten Richtungen auf die Lichtleitfaser (3) wirken.

3. Optischer Überlagerungsempfänger nach Anspruch 1, dadurch gekennzeichnet, daß zur Regelung des Polarisationszustandes des empfangenen Lichtstrahls, der sich in einem planaren Wellenleiter ausbreitet, ein Phasenschieber und ein TE/TM-Modenwandler vorgesehen sind, die auf den sich in dem planaren Wellenleiter ausbreitenden Lichtstrahl wirken und daß dem Phasenschieber und dem TE/TM-Modenwandler jeweils ein Regelsignal und ein Wechselspannungssignal zugeführt werden.

4. Optischer Überlagerungsempfänger, bei dem der empfangene Lichtstrahl, welcher polarisiert ist, einem in einem Lokaloszillator erzeugten Lichtstrahl, welcher ebenfalls polarisiert ist, überlagert wird, bei dem der durch die Überlagerung erzeugte Lichtstrahl einem optisch/elektrischen Wandler zugeführt wird, bei dem das durch diesen erzeugte elektrische Signal zur weiteren Verarbeitung weitergeleitet wird, von dem ein Teil des elektrischen Signals ausgekoppelt und einer Regeleinrichtung zugeführt wird, und bei dem die Regeleinrichtung die Polarisation des von dem Lokaloszillator abgegebenen Lichtstrahls so regelt, daß die Amplitude des elektrischen Ausgangssignals des optischen Überlagerungsempfängers maximal ist, **dadurch gekennzeichnet,** daß das Ausgangssignal des optisch/elektrischen Wandlers einem Gleichrichter zugeführt wird, daß zur Regelung des Polarisationszustandes des von dem Lokaloszillator abgegebenen Lichtstrahls, der sich in einer Lichtleitfaser ausbreitet, zwei Polarisationsstellglieder vorgesehen sind, denen Regelsignale zugeführt werden, daß den Polarisationsstellgliedern zusätzlich zu den Regelsignalen jeweils ein Wechselspannungssignal zugeführt wird, wodurch der Polarisationszustand des empfangenen Lichtstrahls so beeinflußt wird, daß er geringfügig um einen Mittelwert oszilliert, daß sich diese Wechselspannungssignale in ihrer relativen Phasenlage zueinander um $(2n+1)\pi/2$ oder in ihrer Frequenz unterscheiden, daß das Ausgangssignal des Gleichrichters in Mischern mit jeweils einem der Wechselspannungssignale gemischt wird, und daß die Ausgangssignale der Mischer Regelverstärkern, die die Regelsignale für die Polarisationsstellglieder erzeugen, zugeführt werden.

5. Optischer Überlagerungsempfänger nach Anspruch 4, dadurch gekennzeichnet, daß zur Regelung des Polarisationszustandes des von dem Lokaloszillator abgegebenen Lichtstrahls, der sich in einer Lichtleitfaser ausbreitet, die Polarisationsstellglieder in zwei um 45° gegeneinander geneigten Richtungen auf die Lichtleitfaser wirken.

6. Optischer Überlagerungsempfänger nach Anspruch 4, dadurch gekennzeichnet, daß zur Regelung des Polarisationszustandes des von dem Lokaloszillator abgegebenen Lichtstrahls, der sich in einem planaren Wellenleiter ausbreitet, ein Phasenschieber und ein TE/TM-Modenwandler vorgesehen sind, die auf den sich in dem planaren Wellenleiter ausbreitenden Lichtstrahl wirken und daß dem Phasenschieber und dem TE/TM-Modenwandler jeweils ein Regelsignal und ein Wechselspannungssignal zugeführt werden.

**Claims**

1. An optical heterodyne receiver wherein the received light beam (20), which is polarized, is combined with a light beam which is produced in a local oscillator (2) and is also polarized, wherein the light beam produced by the beam combination enters an optical-to electric transducer (6), wherein the electric signal produced by the latter is passed on (11) for further processing, and wherein a portion of the electric signal is coupled out and fed to an automatic control system (4, 5, 8, 9, 12, 13, 14, 15, 16, 17) which controls the polarization of the received light beam in such a way that the amplitude of the electric output signal (11) of the optical heterodyne receiver is maximized, **characterized in** that the output of the optical-to-electric transducer (6) is fed to a rectifier (7), that two polarization control elements (4, 5) fed with control signals are provided for controlling the polarization state of the received light beam, which propagates in an optical fiber (3), that the polarization control elements (4, 5), in addition to being fed with the control signals, are each supplied with an AC voltage signal whereby the state of polarization of the received light beam is influenced so as to slightly oscillate about a mean value, that these AC voltage signals differ in phase by $(2n+1) \frac{\pi}{2}$ or in frequenzy, that mixers (12, 13) each mix the output of the rectifier (7) with one of the AC voltage signals, and that the outputs of the mixers are fed to control amplifiers (16, 17) which produce the control signals for the polarization control elements.

2. An optical heterodyne receiver as claimed in claim 1 characterized in that, to control the polarization state of the received light beam (20), which propagates in an optical fiber (3), the polarization control elements (4, 5) act on the optical fiber (3) in two directions inclined to each other at 45°.

3. An optical heterodyne receiver as claimed in claim 1 characterized in that, to control the polarization state of the received light beam, which propagates in a planar waveguide, a phase shifter an a TE to TM mode converter are provided which act on the light beam propagating in the planar waveguide, and that a control signal and an AC voltage signal are applied both to the phase shifter and to the TE to TM mode converter.

4. An optical heterodyne receiver wherein the received light beam, which is polarized, is combined with a light beam which is produced in a local oscillator and is also polarized, wherein the light beam produced by the beam combination enters an optical-to-electric transducer, wherein the electric signal produced by the latter is passed on for further processing, and wherein a portion of the electric signal is coupled out and fed to an automatic control system which controls the polarization of the light beam produced by the local oscillator in such a way that the amplitude of the electric output signal of the optical heterodyne receiver is maximized, **characterized in** that the output of the optical-to-electric transducer is fed to a rectifier, that two polarization control elements each fed with a control signal are provided for controlling the polarization state of the light beam from the local oscillator, which propagates in an optical fiber, that the polarization control elements, in addition to being fed with control signals, are each supplied with an AC voltage signal whereby the state of polarization of the received light beam is influenced so as to slightly oscillate about a mean value, that these AC voltage signals differ in phase by $(2n+1) \frac{\pi}{2}$ or in frequency, that mixers each mix the output of the rectifier with one of the AC voltage signals, and that the outputs of the mixers are fed to control amplifiers which produce the control signals for the polarization control elements.

5. An optical heterodyne receiver as claimed in claim 4, characterized in that, to control the polarization state of the light beam produced by the local oscillator, which propagates in an optical fiber, the polarization control elements act on the optical fiber in two directions inclined to each other at 45°.

6. An optical heterodyne receiver as claimed in claim 4 characterized in that, to control the polarization state of the light beam produced by the local oscillator, which propagates in a planar waveguide, a phase shifter and a TE to TM mode converter are provided which act on the light beam propagating in the planar waveguide, and that a control signal and an AC voltage signal are applied both to the phase shifter and to the TE to TM mode converter.

## Revendications

1. Récepteur optique hétérodyne dans le cas duquel le rayon lumineux reçu (20), qui est polarisé, est superposé à un rayon lumineux produit dans un oscillateur local (2) et également polarisé, dans le cas duquel le rayon lumineux produit par la superposition est amené à un transducteur optique/électrique (6), et dans le cas duquel est transmis (11), pour la suite du traitement, le signal électrique qui est produit par ce transducteur et dont une partie est découplée et amenée à un dispositif de régulation (4, 5, 8, 9, 12, 13, 14, 15, 16, 17) qui régule la polarisation du rayon lumineux reçu de façon telle que l'amplitude du signal électrique de sortie (11) du récepteur optique hétérodyne est maximale,

   récepteur caractérisé par le fait que le signal de sortie du transducteur optique/électrique (6) est amené à un redresseur (7), que pour la régulation de l'état de polarisation du rayon lumineux reçu, qui se propage dans une fibre optique (3), sont prévus deux organes réglants de polarisation (4, 5) auxquels sont amenés des signaux de régulation, qu'en plus des signaux de régulation est amené, à chacun des organes réglants de polarisation (4, 5), un signal de tension alternative, ce par quoi l'état de polarisation du rayon lumineux reçu est influencé de façon telle qu'il oscille légèrement autour d'une valeur moyenne, que ces signaux de tension alternative se distinguent l'un de l'autre dans leur position relative de phase, de $(2n+1)\pi/2$ ou dans leur fréquence, que le signal de sortie du redresseur (7) se mélange, dans des mélangeurs (12, 13), avec, chacun, l'un des signaux de tension alternative, et que les signaux de sortie des mélangeurs sont amenés à des amplificateurs de régulation (16, 17) qui produisent les signaux de régulation pour les organes réglants de polarisation.

2. Récepteur optique hétérodyne selon la revendication 1, caractérisé par le fait que pour la régulation de l'état de polarisation du rayon lumineux reçu (20), qui se propage dans une fibre optique (3), les organes réglants de polarisation (4, 5) agissent sur les fibres optiques (3) selon deux directions inclinées de 45° l'une par rapport à l'autre.

3. Récepteur optique hétérodyne selon la revendication 1, caractérisé par le fait que pour la régulation de l'état de polarisation du rayon lumineux reçu, qui se propage dans un guide d'ondes plan, sont prévus un déphaseur et un transducteur de mode électrique transversal/magnétique transversal, qui agissent sur le rayon lumineux qui se propage dans le guide d'ondes plan, et par le fait qu'au déphaseur et au transducteur de mode électrique transversal/magnétique transversal sont amenés, à chacun, un signal de régulation et un signal de tension alternative.

4. Récepteur optique hétérodyne dans le cas duquel le rayon lumineux reçu, qui est polarisé, est superposé à un rayon lumineux produit dans un oscillateur local et également polarisé, dans le cas duquel le rayon lumineux produit par la superposition est amené à un transducteur optique/électrique, dans le cas duquel est transmis, pour la suite du traitement, le signal électrique qui est produit par ce transducteur et dont une partie du signal électrique est découplée et amenée à un dispositif de régulation et dans le cas duquel le dispositif de régulation régule la polarisation du rayon lumineux émis par l'oscillateur local de façon telle que l'amplitude du signal électrique de sortie du récepteur optique hétérodyne est maximale,

   récepteur caractérisé par le fait que le signal de sortie du transducteur optique/électrique est amené à un redresseur, que pour la régulation de l'état de polarisation du rayon lumineux émis par l'oscillateur local, qui se propage dans une fibre optique, sont prévus deux organes réglants de polarisation auxquels sont amenés des signaux de régulation, qu'en plus des signaux de régulation est amené, à chacun des organes réglants de polarisation, un signal de tension alternative, ce par quoi l'état de polarisation du rayon lumineux reçu est influencé de façon telle qu'il oscille légèrement autour d'une valeur moyenne, que ces signaux de tension alternative se distinguent l'un de l'autre dans leur position relative de phase, de $(2n+1)\Pi/2$ ou dans leur fréquence, que le signal de sortie du redresseur se mélange, dans des mélangeurs, avec, chacun, l'un des signaux de tension alternative, et que les signaux de sortie des mélangeurs sont amenés à des amplificateurs de régulation qui produisent les signaux de régulation pour les organes réglants de polarisation.

5. Récepteur optique hétérodyne selon la revendication 4, caractérisé par le fait que pour la régulation de l'état de polarisation du rayon lumineux émis par l'ocillateur local, qui se propage dans une fibre optique, les organes réglants de polarisation agissent sur les fibres optiques selon deux directions inclinées de 45° l'une par rapport à l'autre.

6. Récepteur optique hétérodyne selon la revendication 4, caractérisé par le fait que pour la régulation de l'état de polarisation du rayon lumineux émis par l'oscillateur local, qui se propage dans un guide d'ondes plan, sont prévus un déphaseur et un transducteur de mode électrique transversal/magnétique transversal, qui agissent sur le rayon lumineux qui se propage dans le guide d'ondes plan, et par le fait qu'au déphaseur et au transducteur de mode électrique transversal/magnétique transversal sont amenés, à chacun, un signal de régulation et un signal de tension alternative.

O/E

LO

OSZILLATOR

$\frac{\pi}{2}$

A cos ωt

A sin ωt

MISCHER

A sin ωt

MISCHER

A cos ωt

R1

R2

C

R1

R2

C